(19) Europäisches Patentamt
European Patent Office
Office européen des brevets

(11) Publication number: **0 104 253**
**B1**

(12) # EUROPEAN PATENT SPECIFICATION

(45) Date of publication of patent specification: **20.11.86**

(51) Int. Cl.$^4$: **C 09 D 5/14**

(21) Application number: **83901755.5**

(22) Date of filing: **01.04.83**

(86) International application number: **PCT/US83/00516**

(87) International publication number: **WO 83/03423 13.10.83 Gazette 83/24**

(54) **STABILIZER COMPOSITIONS FOR ANTIFOULING PAINTS.**

(30) Priority: **02.04.82 US 365062**

(43) Date of publication of application: **04.04.84 Bulletin 84/14**

(45) Publication of the grant of the patent: **20.11.86 Bulletin 86/47**

(84) Designated Contracting States: **AT BE CH DE FR GB LI LU NL SE**

(56) References cited:
US-A-2 901 452
US-A-3 755 595
US-A-4 128 429
US-A-4 143 015
US-A-4 191 579

(73) Proprietor: **M & T CHEMICALS, INC.**
**One Woodbridge Center**
**Woodbridge, New Jersey 07095 (US)**

(72) Inventor: **BEDNARSKI, John Richard**
**85-10 34th Avenue Jackson Heights**
**Flushing, NY 11372 (US)**
Inventor: **GITLITZ, Melvin H.**
**2 Vauxhall Court**
**Edison, NJ 08817 (US)**
Inventor: **RUSSO, David Alan**
**14 Frances Road**
**Edison, NJ 08817 (US)**

(74) Representative: **Paget, Hugh Charles Edward et al**
**MEWBURN ELLIS & CO. 2/3 Cursitor Street**
**London EC4A 1BQ (GB)**

**EP 0 104 253 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to antifouling coating compositions. More particularly, this invention relates to stabilizer compositions that inhibit the increase in viscosity and eventual gelation which often occur during long term storage of antifouling coating compositions containing cuprous oxide and polymers wherein at least a portion of the repeating units are derived from triorganotin salts of ethylenically unsaturated acids.

The attachment and growth of organisms such as barnacles and algae to submerged portions of a ship's hull substantially increases the resistance of the hull to passage through water. The resultant decrease in fuel efficiency and maximum speed of the vessel is sufficient to justify periodic removal of the accumulated fouling. This a costly operation and usually requires that the ship be out of service in a drydock for a substantial period of time. One method commonly employed to inhibit the attachment and growth of fouling organisms to a hull, and thereby extend the period between successive cleanings and repaintings, is to apply a top coat containing an antifouling agent to all submerged portions of the hull. It has long been recognized that triorganotin compounds such as (tri-n-butyltin)fluoride are particularly effective antifouling agents. United States Patent No. 3,167,473 to John R. Leebrick teaches that deficiencies associated with many triorganotin compounds, such as high mammalian toxicity and an excessively high rate of extractability of the triorganotin compound from a paint film by sea water, can be avoided by chemically incorporating the triorganotin compound into a film-forming polymer. In accordance with the teaching of this patent a triorganotin derivative of an ethylenically unsaturated acid such as acrylic or methacrylic acid is polymerized either alone or in the presence of other ethylenically unsaturated compounds, preferably lower alkyl esters of acrylic or methacrylic acid, that will copolymerize with the triorganotin derivative.

United States Patent No. 4,191,579 to G. H. Hails and J. D. Symonds discloses that when an insoluble, seawater-reactive pigment and an insoluble non-reactive pigment are present in an antifouling topcoat applied to a hull, this combination imparts a self-levelling property to the coating as the ship moves through the water. The rate of dissolution is sufficient to release an effective concentration of toxicant while avoiding premature dissolution of the topcoat and the triorganotin-containing polymer employed as both the binder and the antifouling agents. This patent teaches that cuprous oxide and zinc oxide are two of the preferred seawater-reactive pigments. Coatings containing cuprous oxids and a polymer derived at least in part from a triorganotin salt of an ethylenically unsaturated acid are preferred due to the antifouling activity of cuprous oxide, however these coatings cannot be stored for more than six months due to premature gelation of the polymer. The patent discloses that if longer storage periods are required, the organotin-containing polymer and the cuprous oxide must be packaged as separate components. Such a two-package system is undesirable for commercial applications, since it can be difficult to achieve adequate uniform mixing of large amounts of two components. If the final composition is not homogeneous a coating applied using the composition may not contain the same toxicant level over its entire surface. Premature fouling is most likely to occur in those areas of relatively low toxicant concentration.

In accordance with the teaching of United States Patent No. 4,187,211 to A. V. Robinson and J. Chapman, the storage stability of those antifouling compositions disclosed in the aforementioned U.S. Patent 4,191,579 containing cuprous oxide as the seawater-reactive pigment can be substantially increased by including in the composition a relatively inert and water insoluble dehydrating agent such as the anhydrous and hemihydrate forms of calcium sulfate or various water-reactive organic compounds such as the aliphatic isocyanates. Experimental data have demonstrated that in an accelerated aging study conducted at a temperature of 50°C the viscosity of a coating composition containing anhydrous calcium sulfate, a polymeric triorganotin toxicant and cuprous oxide increased at a faster rate than a control sample in which the calcium sulfate was omitted.

It has now been found that through the use of specific triorganotin compounds and nitrogen compounds and/or reaction products of these compounds, the gelation of the coating compositions of the type disclosed in U.S. Patent 4,191,579, can be prevented even after being stored for up to three months or longer at a temperature of 50°C. In addition, the viscosity of the compositions remain within acceptable limits for application to ship hulls by any of the conventional means.

This invention provides stabilizer compositions which effectively retard the gradual increase in viscosity and ultimate gelation characteristic of antifouling paints containing a polymeric triorganotin carboxylate and cuprous oxide. The stabilizer compositions comprise one or both of (1) a mixture containing (a) a monomeric triorganotin compound and (b) a secondary or tertiary hydroxylamine or alkanolamine, and (2) a reaction product of (a) and (b).

This invention provides stabilizer compositions for antifouling coating compositions comprising (1) a solubilized polymer derived at least in part from at least one triorganotin derivative of an ethylenically unsaturated carboxylic acid and (2) cuprous oxide, zinc oxide, or a mixture of cuprous and zinc oxides.

The viscosity stabilizer of the invention comprises at least one of

a) a mixture comprising

1) an organotin compound selected from the group consisting of triorganotin halides, thioalkoxides, alkoxides, hydroxides, bis-(triorganotin) oxides and bis(triorganotin) sulfides, with the proviso that the said organotin compound is not a tricyclohexyltin compound

2) a nitrogen compound of the general formula

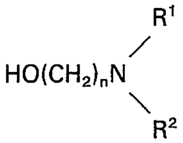 , and

b) the reaction product of said organotin compound and said nitrogen compound.

In the above general formula for the nitrogen compound $R^1$ and $R^2$ are individually selected from hydrocarbyl, substituted hydrocarbyl groups, $(CH_2)_nOH$, hydrogen and

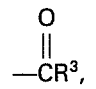

where $R^3$ is hydrocarbyl with the proviso that $R^1$ and $R^2$ cannot both be hydrogen, and n is 0 or an integer from 1 to 4, inclusive.

The proviso that the organotin compound shall not be a tricyclohexyltin compound is occasioned by the disclosure of US—A—3755595. This patent provides a fungicidal and miticidal composition for plant foliage combining a tricyclohexyltin compound with an amine. We are not interested in the use of a tricyclohexyltin compound as the organotin compound referred to in (a) or (b) above, and the use of a tricyclohexyltin compound has therefore been disclaimed.

The weight ratio of the triorganotin compound to the nitrogen compound may be from 1:1 to 10:1, preferably from 3:1 to 6:1. The weight ratio of the triorganotin compound to the nitrogen compound is desirably about 5:1, when the nitrogen compound is a hydroxylamine and 4:1 to 6:1 when the nitrogen compound is an alkanolamine.

In the formula for the nitrogen compound $R^1$ and $R^2$ may, for example, be individually selected from alkyl, cycloalkyl, aryl, $(CH_2)_nOH$, hydrogen and acyl. In an embodiment $R^1$ and $R^2$ are alkyl containing 1 to 20 carbon atoms (preferably 1 to 8 carbon atoms) and n is 0. Particularly preferred is the case where $R^1$ and $R^2$ are ethyl. In another embodiment $R^1$ and $R^2$ are lower alkyl containing from 1 to 8 carbon atoms, such as methyl, ethyl or n-propyl and n is 0 or 2. Alternatively $R^1$ may be $(CH_2)_nOH$, with $R^2$ hydrogen or $(CH_2)_nOH$ and n equal to 2.

The triorganotin compound may be a tributyltin derivative, or other tri(lower alkyl) tin derivative, where each alkyl group contains from 1 to 4 carbon atoms, or a triphenyltin derivative.

The triorganotin compound may be of the formula $R^4_3SnX$ or $(R^4_3Sn)_2Y$, where $R^4$ is hydrocarbyl or substituted hydrocarbyl, X is haligen, —OH, —$SR^5$ or —$OR^5$, where $R^5$ is alkyl containing from 1 to 20 carbon atoms, and Y is oxygen or sulfur. In particular, $R^4$ may be phenyl, inertly substituted phenyl, cycloalkyl containing from 6 to 8 carbon atoms, provided that $R^4_3$ is not tricyclohexyl, lower alkyl containing from 1 to 4 carbon atoms or substituted lower alkyl.

Examples are bis(tin-n-butyltin) oxide, triphenyltin hydroxide and bis(triphenyltin) oxide. Preferably the triorganotin compound is an effective antifouling agent, in which instance $R^4$ is lower alkyl containing from 1 to 4 carbon atoms, a substituted lower alkyl, phenyl or substituted phenyl group. When X is halogen it can be fluorine, chlorine, bromine, iodine or pseudohalogen. The term "pseudohalogen" refers to inorganic radicals which, when in the form of anions, exhibit chemical properties similar to those of the halide ions, in that they combine with hydrogen to form acids and react with silver ion to form water-insoluble salts. The pseudohalide ions include cyanide, thiocyanate ($SCN^-$), cyanate ($OCN^-$), isocyanate ($NCO^-$) and isothio-cyanate ($NCS^-$).

In another aspect the invention provides antifouling paint compositions containing one of the aforementioned stabilizers, a solubilized polymer derived at least in part from at least one triorganotin derivative of an ethylenically unsaturated acid, and a pigment comprising cuprous oxide and/or zinc oxide.

In a narrower embodiment the triorganotin carboxylate is a homopolymer of a tri(lower alkyl)tin- or triphenyltin salt of an ethylenically unsaturated acid or a copolymer of this salt and at least one additional copolymerizable ethylenically unsaturated compound.

In preferred embodiments the ethylenically unsaturated acid is acrylic or methacrylic acid and any comonomers employed to prepare the polymer are esters of acrylic or methacrylate acid and an alcohol containing from 1 to 8 carbon atoms. The repeating units containing the triorganotin ($R^6_3Sn$-) residue constitute from 20 to about 80 mole % of the repeating units present in the polymeric triorganotin carboxylate. The weight ratio of polymeric triorganotin carboxylate to cuprous oxide and/or zinc oxide is from about 3:1 to 1:7 and $R^6$ is butyl or phenyl.

In the paint composition of the invention, the concentration of the viscosity stabilizer is suitably from 0.1 to 10%, (preferably between 0.5 to about 6%), based on the weight of the polymer solids. The composition may include a non-reactive solvent.

The invention also provides a method for stabilizing the viscosity of a paint composition comprising (1) a solubilized polymer derived at least in part from at least one triorganotin derivative of an ethylenically

unsaturated carboxylic acid and (2) cuprous oxide, zinc oxide, or a mixture of cuprous and zinc oxides, where the method comprises incorporating into said composition a viscosity stabilizer as mentioned above.

One of the components of the present stabilizer compositions is a hydroxylamine or a di- or trialkanolamine. These compounds exhibit the general formula

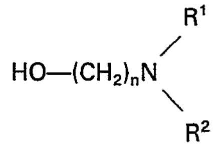

When the nitrogen compound is hydroxylamine, n is 0 and $R^1$ and $R^2$ can be identical or different hydrocarbyl, substituted hydrocarbyl, $(CH_2)_nOH$, hydrogen or acyl

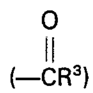

groups, where $R^3$ is hydrocarbyl with the proviso that $R^1$ and $R^2$ cannot both be hydrogen. Preferably $R^1$ and $R^2$ are identical and represent linear or branched chain alkyl groups containing from 1 to 20 carbon atoms, benzyl, phenyl or benzoyl. Most preferably when $R^1$ and $R^2$ are alkyl they contain from 1 to 4 carbon atoms. As used in this specification the term "hydrocarbyl" includes linear and branched chain alkyl containing from 1 to 20 carbon atoms, cycloalkyl containing from 5 to 8 carbon atoms, aryl, alkyl substituted aryl groups (referred to as alkaryl) such as tolyl and xylyl and aryl substituted alkyl groups (referred to as aralkyl) such as benzyl and -phenylethyl. The hydrocarbyl groups represented by $R^1$ and $R^2$ in the foregoing formula can be unsubstituted or may contain 1 or more substituents. When substituents are present they can be relatively unreactive groups such as hydrocarbyloxy, cyano, carboxyl (RCOO— where R is hydrocarbyl) and nitro, or reactive groups such as halogen, hydroxyl, mercapto (—SH), carboxy (—COOH) and isocyanato (—N=C=O).

Preferably any substituents present should also not react with any components of the final coating formulation containing the stabilizer compositions of this invention, since such reactions could adversely affect the stability of the formulation.

The hydroxylamines and salts thereof that are commercially available include N,N-diethylhydroxylamine and N,N-dimethylhydroxylammonium hydrochloride. Representative hydroxylamines that can be employed according to the present invention include

N-phenyl, N-benzoylhydroxylamine
N-benzoylhydroxylamine
N,N-dibenzoylhydroxylamine
N-methylhydroxylamine
N-butylhydroxylamine
N,N-dibutylhydroxylamine
N,N-trifluoromethylhydroxylamine
N-benzyl-N-o-tolylhydroxylamine
N-furoyl-N-phenylhydroxylamine
N,N-dimethylhydroxylamine
N-ethylhydroxylamine

When the nitrogen compounds is a di- or tri- alkanolamine, n of the foregoing formula is an integer from 1 to 4, $R^1$ is $—(CH_2)_nOH$ and $R^2$ is $—(CH_2)_nOH$, a hydrocarbyl group or hydrogen. Preferably n is 2, $R^1$ is $—CH_2CH_2OH$ and $R^2$ is $—CH_2CH_2OH$ or hydrogen, this preference being based on the efficacy of stabilization.

Alkanolamines that can be employed according to this invention include

dimethylethanolamine
diethylethanolamine
ethylethanolamine
diisopropylethanolamine
butyldiethanolamine
methylethanolamine
methyldiethanolamine
ethyldiethanolamine
isopropoylethanolamine
n-butylethanolamine

dimethylisopropanolamine
cyclohexyldiethanolamine
phenylethanolamine
N-cyanoethyl-N-hydroxyethyl aniline
*m*-tolyldiethanolamine
*o*-methoxyphenyldiethanolamine.

The triorganotin compound present in the stabilizer compositions of this invention contains three hydrocarbyl groups bonded to the tin atom. The fourth valence of the tin atom is satisfied by oxygen, sulfur, a halogen atom, a pseudohalogen or the residue remaining following removal of the labile hydrogen atom from an organic or inorganic acid, alcohol, phenol, mercaptan, mercaptoalcohol or ester thereof, mercaptocarboxylic acid or ester thereof, or any other organic or inorganic compound containing a labile hydrogen atom. When an oxygen or sulfur atom is bonded to tin, the compound is a bis(triorganotin)oxide or -sulfide, respectively.

Preferably the three hydrocarbyl groups bonded to the tin atom are either lower alkyl containing from 1 to about 6 atoms or phenyl. This preference is based on the relatively high level of activity against fouling organisms exhibited by this class of compounds. This activity complements the antifouling activity of the polymeric triorganotin compound and the cuprous oxide that comprise the toxicant component of antifouling coating compositions containing the stabilizer compositions of this invention. The three hydrocarbyl groups bonded to the tin atom can be identical or different. Triorganotin compounds containing 2 or 3 different hydrocarbyl groups bonded to tin are reported in the literature.

When the fourth group bonded to the tin atom is halogen it can be fluorine, chlorine, bromine or iodine. The term "pseudohalogen" refers to inorganic radicals which, when in the form of anions exhibit chemical properties similar to those of the halide ions, in that they combine with hydrogen to form acids and react with silver ion to form water-insoluble salts. The pseudohalide ions include cyanide, thiocyanate ($SCN^-$), cyanate ($OCN^-$), isocyanate ($NCO^-$) and isothio-cyanate ($NCS^-$).

Suitable carboxylic acids that can be reacted with a triorganotin halide, hydroxide or bis(triorganotin)oxide to form triorganotin compounds suitable for use in preparing the compositions of this invention include but are not limited to acetic, propionic, butyric, hexanoic, octanoic, dodecanoic, 2-ethylhexoic, eicosanic, benzoic and cyclohexanecarboxylic. Suitable inorganic acids can be mono- or polyfunctional and include among others, nitric, phosphoric, phosphorous and sulfuric.

Example I

This example demonstrates the reduced rate of viscosity increase exhibited.by an antifouling paint formulation containing a stabilizer composition of this invention relative to an unstabilized formulation.

A paint formulation was prepared by blending 0.8 g of Bentonite Clay (Bentone® 27) and 5.2 g of Colloidal Silica (Cab-O-Sil-PTG) in a mixture of 0.9 g of methanol, 33.7 g of methyl isobutyl ketone and 65.2 g of xylene, in a quart (1 liter) sized stainless steel container for approximately five (5) minutes. To this container was added 250.4 g of an organotin acrylate copolymer solution, 229.6 g zinc oxide and 164.2 g of cuprous oxide (Glidden Co.) along with approximately 400 ml of steel shot, approximately 1/8" (3.2 mm) in diameter. The paint was shaken on a Red Devil Paint Shaker for approximately one hour. The paint had a fineness of grind of 5 (approximately 30 microns) on a Hegman gauge. The steel shot was removed by passing the paint through a fine mesh tea strainer. A solution of 4.17 g of bis(tri-m-butyltin)oxide, 0.83 g of N,N-diethylhydroxylamine and 5.0 g of methyl isobutyl ketone was slowly dispersed into the paint under high speed stirring. Stirring was continued for 5 minutes after complete dispersal. The viscosity was determined at 25°C, using a Brookfield viscometer, Model RVF-100 and a number 4 spindle rotating at a speed of 20 rpm.

The organotin acrylate copolymer solution employed in the formulation was prepared as described in United States Patent No. 4,260,535, the relevant portions of which are hereby incorporated by reference.

After the viscosity had been measured, a sample of the coating composition was subjected to an accelerated aging test by placing it in a thermostatically controlled oven maintained at a temperature of 50°C. After 12 weeks the viscosity increased from 0.8 to 1.5 Pa · s (800 to 1500 centipoises), which is considered acceptable for a commercial antifouling paint. For purposes of comparison, a paint of the same formulation in which the bis(tri-n-butyl)tin oxide and N,N-diethylhydroxylamine were omitted exhibited an initial viscosity of 3.1 Pa · s (3100 centipoises). After 12 weeks at 50°C, the viscosity increased to 22 Pa · s (22,000 centipoises).

The correlation between the rate of viscosity increase of a paint observed during an accelerated stability test conducted at elevated temperature with the rate that would be observed at ambient temperature is estimated to be twelve weeks at 50°C equals one year at room temperature.

Addition examples of this invention appear in Table I. The added stabilizers show significant viscosity stabilization over those systems which only contain added solvent.

The efficiency of stabilizers of the same composition was found to depend on the method of paint preparation. The amount of polymer and stabilizer in the grinding or let-down phases of the paint preparation as well as the grinding time influenced the viscosity stability of the paint as Table II illustrates.

When the paint processing variables are taken into account, the effectiveness of the TBTO/DEHA stabilizer system versus TBTO is clearly demonstrated as Table III illustrates.

*$Cu_2O$ Test paint formulation
Test Formula 1

| Ingredient | Parts by weight |
|---|---|
| Organotin copolymer solution (50% solids) | 276.9 |
| ZnO | 254.0 |
| $Cu_2O$ | 181.7 |
| Cab-o-Sil[a] | 5.8 |
| Bentone 27[b] | 0.84 |
| MeOH | 0.98 |
| MIBK | 21.6 |
| Xylene | 72.1 |

***$Cu_2O$ Test paint formulation
Test Formula 2

| Ingredient | Parts by weight |
|---|---|
| Organotin copolymer solution (50% solids) | 406.5 |
| $Cu_2O$ | 333.0 |
| $Fe_2O_3$ | 289.0 |
| Bentone 38[b] | 7.5 |
| Methanol | 2.5 |
| Xylene | 210.0 |

[a] Cabot Corp., Boston, Mass.
[b] NL Industries Inc., Hightstown, N.J.

TABLE I
Stabilizers for antifouling paints*
Viscosity (CPS) (m Pa · s)
Time (weeks) at 50°C

| Composition | Trial | 0 | 1 | 2 | 3 | 4 | 5 | 6 | 7 | 8 | 9 | 10 | 11 | 12 |
|---|---|---|---|---|---|---|---|---|---|---|---|---|---|---|
| 2%**TBTO/DEHA (5/1) | 1 | 1500 | | | | | | | | | | | | 4700 |
| | 2 | 1250 | | | | | | | | | | | | 3600 |
| | 3 | 1600 | | | | | | | | | | 4600 | | 5200 |
| 2%R.P. TBTO(1 mole)/DEHA (2 mol) | 1 | 1600 | | | | | | | | | | | | 4650 |
| | 2 | 1600 | | | | | | | | | | 3800 | | 5000 |
| 2% TBTO/DEA (5.7/1) | | 550 | | | | | | | | | 5400 | 10000 | | |
| 2%R.P.TBTO/DEA (1 mol/1 mol) | | 1100 | | | | | | | | | 3700 | 6000 | | 17200 |
| 2% TBTO/TEA (5.9/1) | | 900 | | | | | | | | 5450 | 10000 | | | |
| 2% R.P. TBTO/TEA (1 mol/0.67 mol) | | 2600 | | | | | | 4950 | | | 13000 | | | |
| 2% TBTO | | 1160 | | | | | | | 4200 | | 5750 | | 10600 | |
| 3% TBTO | | 1420 | | | | | | | | | | 5100 | | 7350 |
| 0.5% DEHA*** | | 500 | | | | | | | | | Gelled | | | |
| 0.22% DEHA*** | | 575 | | | | | | | | | 9300 | | | |
| 2% DEA | | 1450 | 13000 | | | | | | | | | | | |
| 2% TEA | | 2600 | 120000 | | | | | | | | | | | |
| 2% ETOH | | 3150 | | | | 25000 | | | | | | | | |
| 2% MIBK | | 4100 | | | | 25000 | | | | | | | | |

Ratios are on a weight basis unless otherwise indicated.
* Composition of paints attached (Test Formula 1).
** Stabilizers added at 2% by weight of organotin copolymer solution.
*** Paint contained only $Cu_2O$ pigment. No ZnO was used (Test Formula 2).

R.P.=Reaction Product
TBTO Bis(tributyltin)oxide
DEHA N,N-diethylhydroxylamine
DEA diethanolamine
TEA triethanolamine
ETOH ethanol
MIBK methyl isobutyl ketone.

TABLE II
Effect of processing variables on stabilizer efficiency

| Stabilizer | Processing variables | Grind time: 7.5 min. Vi (cp) | 7.5 min. Vf (cp) | 30 min. Vi (cp) | 30 min. Vf (cp) | 60 min. Vi (cp) | 60 min. Vf (cp) |
|---|---|---|---|---|---|---|---|
| | | (m Pa · s) | (m Pa · s) | (m Pa · s) | (m Pa · s) | (m Pa · s) | (m Pa · s) |
| 2% TBTO/DEHA | In grind with 20% polymer | 1930 | 4665 | 1900 | 5030 | — | — |
| | 〃 〃 〃 75% 〃 | 1710 | 3590 | 1800 | 1465 | — | — |
| 2% TBTO/DEHA | In let down with 20% polymer | 1170 | 2750 | 1100 | 1910 | 1060 | 2150 |
| | 〃 〃 〃 〃 75% 〃 | 1860 | 3705 | 1960 | 3160 | 1500 | 3420 |

TABLE III
Effect of processing variables on stabilizer efficiency

| Stabilizer | Variables | With 20% polymer Vi (cp) | With 20% polymer Vf (cp) | With 20% polymer %Δ | With 75% polymer Vi (cp) | With 75% polymer Vf (cp) | With 75% polymer %Δ |
|---|---|---|---|---|---|---|---|
| | | (m Pa · s) | (m Pa · s) | | (m Pa · s) | (m Pa · s) | |
| 2% TBTO/DEHA | In grind, 30 minutes | 2000 | 4150 | 108 | 2060 | 2720 | 32 |
| 2% TBTO | 〃 〃 〃 〃 | 1240 | 5115 | 312 | 1950 | 7240 | 271 |

Vi =initial viscosity
Vf =final viscosity
Δ =increase
cp =centipoise

**Claims**

1. A viscosity stabilizer for compositions comprising (1) a solubilized polymer derived at least in part from at least one triorganotin derivative of an ethylenically unsaturated carboxylic acid and (2) cuprous oxide, zinc oxide, or a mixture of cuprous and zinc oxides, said viscosity stabilizer comprising at least one of

a) a mixture comprising

1) an organotin compound selected from the group consisting of triorganotin halides, thioalkoxides, alkoxides, hydroxides, bis(triorganotin) oxides and bis(triorganotin) sulfides, with the proviso that the said organotin compound is not a tricyclohexyl tin compound

2) a nitrogen compound of the general formula

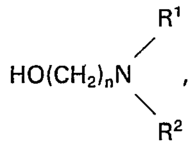

, and

b) the reaction product of said organotin compound and said nitrogen compound, where $R^1$ and $R^2$ are individually selected from hydrocarbyl, substituted hydrocarbyl groups, $(CH_2)_nOH$, hydrogen and

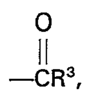

where $R^3$ is hydrocarbyl with the proviso that $R^1$ and $R^2$ cannot both be hydrogen, and n is 0 or an integer from 1 to 4, inclusive.

2. A viscosity stabilizer according to Claim 1 wherein the weight ratio of the organotin compound to the nitrogen compound is from 1:1 to 10:1.

3. A viscosity stabilizer according to Claim 2 wherein the weight ratio of the organotin compound to the nitrogen compound is from 3:1 to 6:1.

4. A viscosity stabilizer according to any preceding Claim where $R^1$ and $R^2$ are individually selected from the group consisting of alkyl, cycloalkyl, aryl, $(CH_2)_nOH$, hydrogen and acyl.

5. A viscosity stabilizer according to Claim 4 where $R^1$ and $R^2$ are alkyl containing from 1 to 20 carbon atoms and n is 0.

6. A viscosity stabilizer according to Claim 5 where $R^1$ and $R^2$ are lower alkyl containing from 1 to 8 carbon atoms.

7. A viscosity stabilizer according to Claim 6 where $R^1$ and $R^2$ are ethyl.

8. A viscosity stabilizer according to Claim 4 where $R^1$ is $(CH_2)_nOH$, $R^2$ is H or $(CH_2)_nOH$ and n is 2.

9. A viscosity stabilizer according to any preceding Claim where said organotin compound is a tri(lower alkyl)tin derivative, where each alkyl group contains from 1 to 4 carbon atoms, or a triphenyltin derivative.

10. A viscosity stabilizer according to Claim 9 where said tri(lower alkyl) tin derivative is a tributyltin derivative.

11. A viscosity stabilizer according to Claim 4 where $R^1$ and $R^2$ are lower alkyl containing from 1 to 8 carbon atoms and n is 0 or 2.

12. A viscosity stabilizer according to Claim 11 where $R^1$ and $R^2$ are methyl, ethyl or n-propyl.

13. A viscosity stabilizer according to any one of Claims 1 to 8 where the organotin compound is of the general formula $R^4_3SnX$ or $(R^4_3Sn)_2Y$ where $R^4$ is hydrocarbyl or substituted hydrocarbyl, X is halogen, —OH, $—SR^5$ or $OR^5$, where $R^5$ is alkyl containing from 1 to 20 carbon atoms and Y is oxygen or sulfur.

14. A viscosity stabilizer according to Claim 13 where $R^4$ is phenyl, inertly substituted phenyl, cycloalkyl containing from 6 to 8 carbon atoms, lower alkyl containing from 1 to 4 carbon atoms, or substituted lower alkyl.

15. A viscosity stabilizer according to Claim 13 where the organotin compound is bis(tri-n-butyltin) oxide, triphenyltin hydroxide or bis(triphenyltin)oxide.

16. An antifouling paint composition comprising (1) a solubilized polymer derived at least in part from at least one triorganotin derivative of an ethylenically unsaturated acid, (2) a pigment comprising cuprous oxide, zinc oxide or a mixture of cuprous and zinc oxides and (3) a viscosity stabilizer of any of Claim 1—15.

17. An antifouling paint composition according to Claim 16 where the concentration of the viscosity stabilizer is from 0.1 to 10% based on the weight of the polymer solids.

18. An antifouling paint composition according to Claim 17 where the concentration of the viscosity stabilizer is from about .5 to about 6%, based on the weight of the polymer solids.

19. An antifouling paint composition according to any one of Claims 16 to 18 where the composition includes an non-reactive solvent.

20. An antifouling paint composition according to any of Claims 16 to 19 where said ethylenically unsaturated acid is acrylic or methacrylic acid.

21. An antifouling paint composition according to any of Claims 16 to 20 where said polymer is derived in part from at least one non-tin-containing ethylenically unsaturated compound.

22. An antifouling paint composition according to Claim 21 where the non-tin-containing ethylenically unsaturated compound is an ester of acrylic or methacrylic acid and an alcohol containing from 1 to 8 carbon atoms.

23. A method for stabilizing the viscosity of a paint composition comprising (1) a solubilized polymer derived at least in part from at least one triorganotin derivative of an ethylenically unsaturated carboxylic acid and (2) cuprous oxide, zinc oxide, or a mixture of cuprous and zinc oxides, where the method comprises incorporating into said composition a viscosity stabilizer in accordance with any of Claims 1 to 15.

24. A method according to Claim 23 where the concentration of the viscosity stabilizer is from 0.1 to 10%, based on the weight of the polymer solids.

25. A method according to Claim 24 where the concentration of the viscosity stabilizer is from 0.5 to 6.0% based on the weight of the polymer solids.

**Patentansprüche**

1. Ein Viskositätsstabilisator für Zusammensetzungen umfassend (1) ein solubilisiertes Polymer, das wenigstens teilweise von wenigstens einem Triorganozinnderivat einer äthylenisch ungesättigten Carbonsäure abgeleitet ist und (2) Kupfer(I)-oxid, Zinkoxid oder eine Mischung aus Kupfer(I)-oxid und Zinkoxid, der genannte Viskositätsstabilisator umfassend wenigstens einen Bestandteil der Gruppe enthaltend

a) eine Mischung aus

1) einer Organozinnverbindung bestehend aus Triorganozinnhaliden, -thioalkoxiden, -alkoxiden, -hydroxiden, Bis(triorganozinn)oxiden und/oder Bis(triorganozinn)sulfiden, mit der Maßgabe, daß die Organozinnverbindung keine Tricyclohexylzinnverbindung ist, und

2) einer Stickstoffverbindung der allgemienen Formel

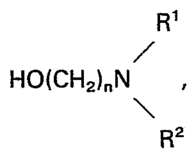

, und

b) das Reaktionsprodukt der genannten Organozinnverbindung und der genannten Stickstoffverbindung,

worin $R^1$ und $R^2$ individuell aus Hydrocarbyl, substituierten Hydrocarbylgruppen, $(CH_2)_nOH$, Wasserstoff und

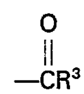

gewählt sind, worin $R^3$ Hydrocarbyl bedeutet, mit der Maßgabe, daß $R^1$ und $R^2$ nicht beide Wasserstoff bedeuten können, und N für 0 oder eine ganze Zahl von 1 bis einschließlich 4 steht.

2. Ein Viskositätsstabilisator nach Anspruch 1, worin das Gewichtsverhältnis der Organozinnverbindung zur Stickstoffverbindung 1:1 bis 10:1 beträgt.

3. Ein Viskositätsstabilisator nach Anspruch 2, worin das Gewichtsverhältnis der Organozinnverbindung zur Stickstoffverbindung 3:1 bis 6:1 beträgt.

4. Ein Viskositätsstabilisator nach einem der vorhergehenden Anpsrüche, worin $R^1$ und $R^2$ individuell aus der Gruppe bestehend aus Alkyl, Cycloalkyl, Aryl, $(CH_2)_nOH$, Wasserstoff und Acyl gewählt werden.

5. Ein Viskositätsstabilisator nach Anspruch 4, worin $R^1$ und $R^2$ für Alkyl mit 1—20 C-Atomen stehen und n 0 bedeutet.

6. Ein Viskositätsstabilisator nach Anspruch 5, worin $R^1$ und $R^2$ Niederalkyl mit 1—8 C-Atomen sind.

7. Ein Viskositätsstabilisator nach Anspruch 6, worin $R^1$ und $R^2$ Äthyl darstellen.

8. Ein Viskositätsstabilisator nach Anspruch 4, worin $R^1$ $(CH_2)_nOH$ ist, $R^2$ H oder $(CH_2)_nOH$ darstellt und n für 2 steht.

9. Ein Viskositätsstabilisator nach einem der vorhergehenden Ansprüche, worin die genannte Organozinnerverbindung ein Tri(niederalkyl)zinnderivat, worin jede Alkylgruppe 1—4 C-Atome enthält, oder ein Triphenylzinnderivat ist.

10. Ein Viskositätsstabilisator nach Anspruch 9, worin das genannte Tri(niederalkyl)zinnderivat ein Tributylzinnderivat ist.

11. Ein Viskositätsstabilisator nach Anspruch 4, worin $R^1$ und $R^2$ Niederalkyl mit 1—8 C-Atomen sind und n für 0 oder 2 steht.

12. Ein Viskositätsstabilisator nach Anspruch 11, worin $R^1$ und $R^2$ Methyl, Äthyl oder n-Propyl bedeuten.

13. Ein Viskositätsstabilisator nach einem der Ansprüche 1 bis 8, worin die Organozinnverbindung die allgemeine Formel $R^4_3SnX$ oder $(R^4_3Sn)_2Y$ besitzt, worin $R^4$ Hydrocarbyl oder substituiertes Hydrocarbyl ist, X Halogen, —OH, —$SR^5$ oder $OR^5$ darstellt, worin $R^5$ für ein Alkyl mit 1—20 C-Atomen steht, und Y Sauerstoff oder Schwefel bedeutet.

14. Ein Viskositätsstabilisator nach Anspruch 13, worin $R^4$ Phenyl, inert substituiertes Phenyl, Cycloalkyl mit 6—8 C-Atomen, Niederalkyl mit 1—4 C-Atomen oder substituiertes Niederalkyl bedeutet.

15. Ein Viskositätsstabilisator nach Anspruch 13, worin die Organozinnverbindung Bis(tri-n-butylzinn)oxid, Triphenylzinnhydroxid oder Bis(triphenylzinn)oxide ist.

16. Eine Antifoulinganstrichmittel-Zusammensetzung umfassend (1) ein solubilisiertes Polymer, das wenigstens teilweise von wenigstens einem Triorganozinnderivat einer äthylenisch ungesättigten Säure abgeleitet ist, (2) ein Pigment, das Kupfer(I)-oxid, Zinkoxid oder ein Gemisch aus Kupfer(I)-oxid und Zinkoxid umfaßt und (3) einen Viskositätsstabilisator nach einem der Ansprüche 1 bis 15.

17. Eine Antifoulinganstrichmittel-Zusammensetzung nach Anspruch 16, worin die Konzentration des Viskositätsstabilisators 0,1—10 % bezogen auf das Gewicht der Polymerfeststoffe beträgt.

18. Eine Antifoulinganstrichmittel-Zusammensetzung nach Anspruch 17, worin die Konzentration des Viskositätsstabilisators etwa 0,5 bis etwa 6 % bezogen auf das Gewicht der Polymerfeststoffe beträgt.

19. Eine Antifoulinganstrichmittel-Zusammensetzung nach einem der Ansprüche 16 bis 18, worin die Zusammensetzung ein nicht reaktionsfähiges Lösungsmittel enthält.

20. Eine Antifoulinganstrichmittel-Zusammensetzung nach einem der Ansprüche 16 bs 19, worin die genannte äthylenisch ungesättigte Säure Acryl- oder Methacrylsäure ist.

21. Eine Antifoulinganstrichmittel-Zusammensetzung nach einem der Ansprüche 16 bis 20, worin das genannte Polymer teilweise von wenigstens einer nicht zinnhältigen, äthylenisch ungesättigten Verbindung abgeleitet ist.

22. Eine Antifoulinganstrichmittel-Zusammensetzung nach Anspruch 21, worin die nicht zinnhältige äthylenisch ungesättigte Verbindung ein Ester einer Acry- oder Methacrylsäure und eines Alkohols mit 1—8 C-Atomen ist.

23. Ein Verfahren zur Stabilisierung der Viskosität einer Anstrichmittelzusammensetzung umfassend (1) ein solubilisiertes Polymer, das wenigstens teilweise von wenigstens einem Triorganozinnderivat einer äthylenisch ungesättigten Carbonsäure abgeleitet ist und (2) Kupfer(I)-oxid, Zinkoxid oder eine Mischung aus Kupfer(I)-oxid und Zinkoxid, worin das Verfahren das Einbringen eines Viskositätsstabilisators nach einem der Ansprüche 1 bis 15 in die genannte Zusammensetzung umfaßt.

24. Ein Verfahren nach Anspruch 23, worin die Konzentration des Viskositätsstabilisators 0,1—10 %, bezogen auf das Gewicht der Polymerfeststoffe beträgt.

25. Ein Verfahren nach Anspruch 24, worin die Konzentration des Viskositätsstabilisators von 0,5 bis 6,0 % bezogen auf das Gewicht der Polymerfeststoffe beträgt.

**Revendications**

1. Stabilisant de la viscosité pour des compositions comprenant (1) un polymère solubilisé dérivé au moins partiellement d'au moins un dérivé de triorganoétain d'un acide carboxylique à insaturation éthylénique et (2) de l'oxyde cuivreux, de l'oxyde de zinc ou un mélange d'oxydes cuivreux et de zinc, ledit stabilisant de viscosité comprenant au moins l'un de

a) un mélangé comprenant
   1) un composé d'organoétain choisi dans le groupe consistant en halogénures, thioalcoolates, alcoolates, hydroxydes de triorganoétain, oxydes de bis(triorganoétain) et sulfures de bis(triorganoétain) à condition que ledit composé d'organoétain ne soit pas un composé de tricyclohexylétain.
   2) un composé d'azote de formule générale

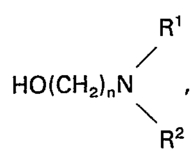

, et

b) le produit réactionnel dudit composé d'organoétain et dudit composé d'azote,

où $R^1$ et $R^2$ sont individuellement choisis parmi des groupes hydrocarbyles, hydrocarbyles substitués, $(CH_2)_nOH$, hydrogène et

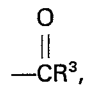

où $R^3$ est hydrocarbyle à condition que $R^1$ et $R^2$ ne puissent être tous deux de l'hydrogène et n est 0 ou un nombre entier de 1 à 4 inclus.

2. Stabilisant de la viscosité selon la revendication 1 où le rapport pondéral du composé d'organoétain au composé d'azote est de 1:1 à 10:1.

3. Stabilisant de la viscosité selon la revendication 2 où le rapport pondéral du composé d'organoétain au composé d'azote est de 3:1 à 6:1.

4. Stabilisant de la viscosité selon l'une quelconque des revendications précédentes où $R^1$ et $R^2$ sont individuellement choisis dans le groupe consistant en alcoyle, cycloalcoyle, aryle, $(CH_2)_nOH$, hydrogène et acyle.

5. Stabilisant de la viscosité selon la revendication 4 où $R^1$ et $R^2$ sont alcoyles contenant de 1 à 20 atomes de carbone et n est 0.

6. Stabilisant de la viscosité selon la revendication 5 où $R^1$ et $R^2$ sont alcoyles inférieurs contenant de 1 à 8 atomes de carbone.

7. Stabilisant de la viscosité selon la revendication 6 où $R^1$ et $R^2$ sont éthyles.

8. Stabilisant de la viscosité selon la revendication 4 où $R^1$ est $(CH_2)_nOH$, $R^2$ est H ou $(CH_2)_nOH$ et n est 2.

9. Stabilisant de la viscosité selon l'une quelconque des revendications précédentes où ledit composé d'organoétain est un dérivé de tri(alcoyle inférieur)étain, où chaque groupe alcoyle contient de 1 à 4 atomes de carbone, ou un dérivé de triphénylétain.

10. Stabilisant de la viscosité selon la revendication 9 où ledit dérivé de tri(alcoyle inférieur) étain est un dérivé de tributylétain.

11. Stabilisant de la viscosité selon la revendication 4 où $R^1$ et $R^2$ sont alcoyles inférieurs contenant de 1 à 8 atomes de carbone et n est 0 ou 2.

12. Stabilisant de la viscosité selon la revendication 11 où $R^1$ et $R^2$ sont méthyle, éthyle ou n-propyle.

13. Stabilisant de la viscosité selon l'une quelconque des revendications 1 à 8 où le composé d'organoétain est de formule générale $R^4_3SnX$ ou $(R^4_3Sn)_2Y$ où $R^4$ est hydrocarbyle ou hydrocarbyle substitué, X est halogène, —OH, —$SR^5$ ou $OR^5$, où $R^5$ est un alcoyle contenant de 1 à 20 atomes de carbone et Y est oxygène ou soufre.

14. Stabilisant de la viscosité selon la revendication 13 où $R^4$ est phényle, phényle substitué de manière inerte, cycloalcoyle contenant de 6 à 8 atomes de carbone, alcoyle inférieur contenant de 1 à 4 atomes de carbone ou alcoyle inférieur substitué.

15. Stabilisant de la viscosité selon la revendication 13 où le composé d'organoétain est l'oxyde de bis(tri-n-butylétain), l'hydroxyde de triphénylétain ou l'oxyde de bis(triphénylétain).

16. Composition de peinture antisalissures comprenant (1) un polymère solubilisé dérivé au moins partiellement d'au moins un dérivé de triorganoétain d'un acide à insaturation éthylénique, (2) un pigment comprenant de l'oxyde cuivreux, de l'oxyde de zinc ou un mélange d'oxydes cuivreux et de zinc et (3) un stabilisant de la viscosité selon l'une quelconque des revendications 1—15.

17. Composition de peinture antisalissures selon la revendication 16 où la concentration du stabilisant de la viscosité est de 0,1 à 10 % en se basant sur le poids des solides du polymère.

18. Composition de peinture antisalissures selon la revendication 17 où la concentration du stabilisant de la viscosité est de 0,5 à environ 6 % en se basant sur le poids des solides du polymère.

19. Composition de peinture antisalissures selon l'une quelconque des revendications 16 à 18 où la composition contient un solvant non réactif.

20. Composition de peinture antisalissures selon l'une quelconque des revendications 16 à 19 où ledit acide à insaturation éthylénique est l'acide acrylique ou méthacrylique.

21. Composition de peinture antisalissures selon l'une quelconque des revendications 16 à 20 où ledit polymère est dérivé partiellement d'au moins un composé à insaturation éthylénique ne contenant pas d'étain.

22. Composition de peinture antisalissures selon la revendication 21 où le composé à insaturation éthylénique ne contenant pas d'étain est un ester d'un acide acrylique ou méthacrylique et un alcool contenant de 1 à 8 atomes de carbone.

23. Méthode de stabilisation de la viscosité d'une composition de peinture comprenant (1) un polymère solubilisé dérivé au moins partiellement d'au moins un dérivé de triorganoétain ou un acide carboxylique à insaturation éthylénique et (2) de l'oxyde cuivreux, de l'oxyde de zinc ou un mélange d'oxydes cuivreux et de zinc, où la méthode consiste à incorporer dans ladite composition un stabilisant de la viscosité selon l'une quelconque des revendications 1 à 15.

24. Méthode selon la revendication 23 où la concentration du stabilisant de la viscosité est de 0,1 à 10% en se basant sur le poids des solides du polymère.

25. Méthode selon la revendication 24 où la concentration du stabilisant de la viscosité est de 0,5 à 6,0 % en se basant sur le poids des solides du polymère.